# EUROPEAN PATENT SPECIFICATION

(11) **EP 2 503 128 B1**
(45) Date of publication and mention of the grant of the patent: **29.04.2015**
(21) Application number: 12160539.8
(22) Date of filing: 21.03.2012
(51) Int. Cl.: F02B 43/00, F02M 21/02, B60K 15/03, B60K 15/035, B63J 2/06, F02B 61/04, F02D 19/02

(54) **Fuel supply system for boats fuelled by alternative fuels and relative boats**
Kraftstoffzufuhrsystem für mit alternativen Krafstoffen betriebenen Booten und Boote hierzu
Système d'alimentation en carburant pour des bateaux et bateaux associés

(30) Priority: 21.03.2011 IT PD20110086
(43) Date of publication of application: 26.09.2012
(73) Proprietor: CVO Technologies S.r.l., 31100 Treviso (IT)
(72) Inventor: Van Oevelen, Chris Albert Lea, 31100 Treviso (IT)
(74) Representative: Mitola, Marco

(56) References cited:
- WO-A1-84/01339
- CN-Y- 2 792 945
- DE-A1- 19 802 643
- DE-U1- 9 202 573
- GB-A- 2 044 349
- US-A- 3 115 114
- US-A- 5 197 910
- US-B1- 7 021 249

## Description

The present invention relates to a fuel supply system for boats fuelled by alternative fuels such as LPG (liquefied petroleum gas), methane, hydrogen and the like.

The invention also relates to a boat, of the type with outboard or inboard motor, comprising said fuel supply system.

In particular, in alternatively fuelled motors, the fuel is usually compressed, in a liquid or gaseous phase, in pressurised tanks.

Obviously, in order to be sent or supplied to the motor, the fuel must pass through pressure regulators, that is to say pressure vaporisers/reducers, in an accurate, controlled manner.

The fuel is then sent from the pressure regulators to injectors or solenoid valves or mixers which inject the fuel into the intake manifold or directly into the engine cylinders, both in the gaseous or liquid phase. Such functioning may take place in both bi-fuel and dual-fuel motors, Otto cycle motors, or controlled ignition motors, Diesel cycle motors or compression ignition motors; in addition, the motor may be aspirated or pressure charged, 2 stroke or 4 stroke.

The use of fuels such as LPG, methane, hydrogen or other fuels on boats while on the one hand greatly limiting the emission of pollutants, on the other entails some safety risks.

In fact, the components of the fuel supply systems of motors contain pressurised gas which may be subject to leaks.

Above all the marine environment accentuates corrosion phenomena of the system components (such as for example the gas supply pipes themselves) and therefore heightens the risk of the dispersion of gas in the boat environment.

In addition, the pressure regulator is provided with fuel supply and delivery ducts which are subject not only to the corrosive action of the marine environment but also to the significant vibrations transmitted by the boat and by the motor.

Such vibrations and corrosion contribute to damaging not only the regulator itself but also all the ducts connected to it and may cause gas leaks.

The boat systems have some safety devices such as for example blow-off valves which are designed to prevent explosions of the pressure regulator, piping or tank.

Despite this, any gas leaks are not always obstructed and/or detected and consequently, in specific functioning conditions, may cause dangerous explosions.

The purpose of these present invention is to provide a fuel supply system for motor boats, whether with outboard or inboard motor, fuelled by alternative fuels, which overcomes the drawbacks mentioned with reference to the prior art, in terms of safety.

Such drawbacks and limitations are resolved by a fuel supply system according to claim 1.

Other embodiments of the fuel supply system according to the invention are described in the subsequent claims.

Further characteristics and advantages of the present invention will be more clearly comprehensible from the description given below of its preferred and non-limiting embodiments, wherein:

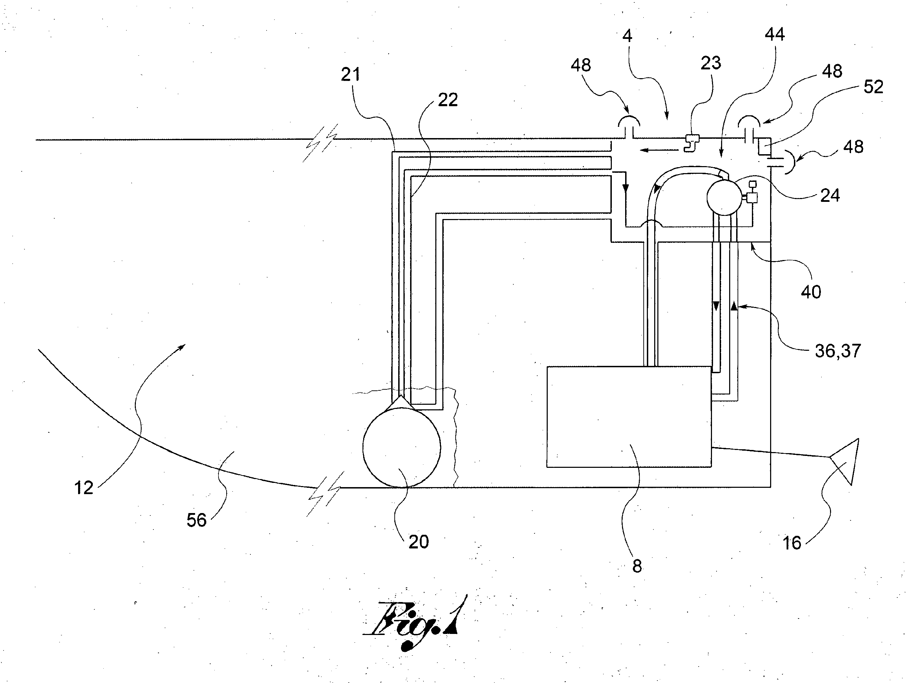

figure 1 shows a schematic view of a boat with an inboard motor fitted with a fuel supply system according to one embodiment of the present invention;

figure 1 shows a schematic view of the boat in figure 1, according to an embodiment variation of the present invention;

figure 3 shows a schematic view of a boat with outboard motor fitted with a fuel supply system according to a further embodiment of the present invention;

figure 4 shows a perspective view of the detail IV in figure 3.

The elements or parts of elements common to the embodiments described below will be indicated using the same reference numerals.

With reference to the aforesaid figures, reference numeral 4 globally denotes a fuel supply system for motors 8 of motor boats 12, both of the outboard and inboard type, said motors being fuelled by alternative fuels.

The present invention, as explained further below, refers to any type of boat whether with an inboard or outboard motor.

The motor 8 may comprise either a 4 stroke or 2 stroke endothermic motor, provided, preferably, with injection fuel supply (but also carburettor) devices.

In addition, the motor 8 may be both bi-fuel and dual-fuel, an Otto cycle motor, or controlled ignition motor, Diesel cycle motor or compression ignition motor. In addition, the motor 8 may be aspirated or pressure charged, either 2 stroke or 4 stroke.

The motor 8 may be operatively connected to means of propulsion of the boat 12, such as propellers 16, and/or to electricity generator means of the boat 12. In other words, the motor 8 may act as a means of propulsion and/or as a generator means of electricity.

Alternative fuels are understood to be fuels in an essentially gaseous state, typically LPG, methane, hydrogen used in place of more traditional fuels such as petrol and gas-oil.

The system 4 comprises a tank 20 of fuel, conserved in a liquid and/or gaseous state; the tank 20 is provided with a filler duct 21 and a distribution duct 22; filling may for example be through a special hose 23 connected to the filler duct 21.

The tank is preferably provided with a fire resistant or in any case flame retardant protection.

The system 4 comprises at least one pressure regulator 24 suitable for regulating the pressure of the fuel to be supplied to the motor 8.

In particular, the pressure regulator 24 receives the fuel from a supply duct 28 at a fuel supply pressure and delivers it in output, through a delivery duct 32 at a delivery pressure, different from the supply pressure, to injection and/or solenoid valve or mixer devices which supply the motor 8 with fuel.

Typically, the supply pressure is greater than the delivery pressure; moreover said supply and delivery pressures are greater than the environmental pressure or atmospheric pressure.

the pressure regulator 24 can be connected to a heating circuit 36 suitable for heating the fuel coming out of the regulator 24 before it is supplied to the motor 8. Such heating system may comprise one or more hot water pipes 37 which at least partially lap a regulator expansion chamber in which the fuel passes from the supply pressure to the delivery pressure, cooling on account of the reduction in pressure and relative expansion. Such cooling circuit may for example be at least partially a derivation of the cooling circuit of the motor 8.

Advantageously, the system 4 comprises at least one closed container 40 which identifies an inner volume 44 containing said pressure regulator 24 and, at least partially, the supply and delivery ducts 28,32.

The at least one container 40 is altogether hermetically tight sealed to the gaseous fuel, in relation to the fuel passing through the devices contained in it, such fuel being normally at a higher pressure than the environmental pressure where the system 4 is located.

Preferably, the container 40 is provided with a fire resistant or in any case flame retardant protection.

Advantageously, the container 40 comprises at least one vent 48 in fluidic communication with the inner volume 44 of the container 40, the vent 48 fluidically connecting the inner volume 44 with the environment outside the system 4 and with the relative boat 12 which the system 4 is fitted in, so as to channel any fuel leaks, at a higher pressure than environmental pressure, towards the outside of the boat.

The definition of hermetically tight sealed container should be considered in the sense that the container does not permit any leak of gas from the inner volume 44 outwards, except exclusively through the vents 48.

According to one embodiment, the vents 48 are pipes which allow air to escape outside the boat.

Preferably, the vents 48 are provided with a fire resistant or in any case flame retardant protection; for example the vents 48 may be pipes covered with a fire resistant or flame retardant sheath.

Any fuel leaks are normally at a higher pressure than the environmental pressure, so that in the inner volume an overpressure would arise in the case of any leaks which would automatically channel the fuel towards the vents 48.

According to one embodiment, on at least one of said vents 48, a gas detector device 52 may be positioned suitable for detecting the passage of gaseous fuel through such vent 48 and for signalling the presence of a leak.

The gas detector 52 represents a further safety element. In fact any leaks of gas can only escape from the inner volume 44 through said vents 48. The positioning of the gas detector 52 at the vents 48 ensures that any leaks will be detected and signalled so as to further reduce the risks of explosion.

According to a further embodiment, at said vents 48 at least one fan is positioned suitable to improve the extraction of any leaks of gas from the inner volume 44 towards the outside environment and/or suitable to improve the circulation of air inside the inner volume 44.

According to one possible embodiment, typical of boats with inboard motors, the container 40 is attached to a portion of hull 56 of the boat 12 so as to be inside the boat 12 and said vent 48 opens onto the outside of the boat 12 so as to place the inner volume 44 in communication with the outside environment.

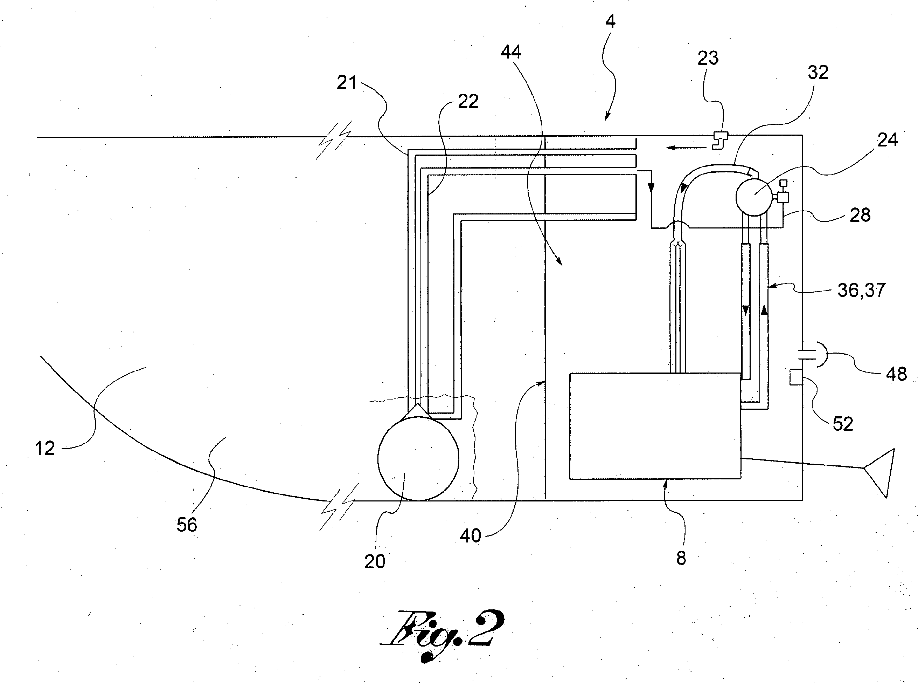

According to a further possible embodiment (figure 2)" again in the case of boats with inboard motors, said container 40 also encloses the motor 8; in other words, the housing compartment of the motor inside the boat 12, below deck, is hermetically sealed towards the outside except for the presence of the vents 48.

In applications to boats with inboard motors, the container 40 may contain and enclose the motor 8 but not necessarily. In other words, the motor 8 may be positioned inside or outside the container 40.

In particular, the vents 48, suitable for placing the inner volume 44 in communication with the outside environment, also supply an air suction system of the motor so as to enable the introduction of air from the outside environment in the motor, mixed with any gas leaks inside the container.

In other words, the vents act as means to channel towards the outside of the volume 44 any fuel leaks and to enable the suction of air by the motor 8, during its functioning.

When the motor is on, the suction of air means that any fuel leaks can be also be aspirated: in such case the leaks are recuperated and introduced into the motor to be combusted.

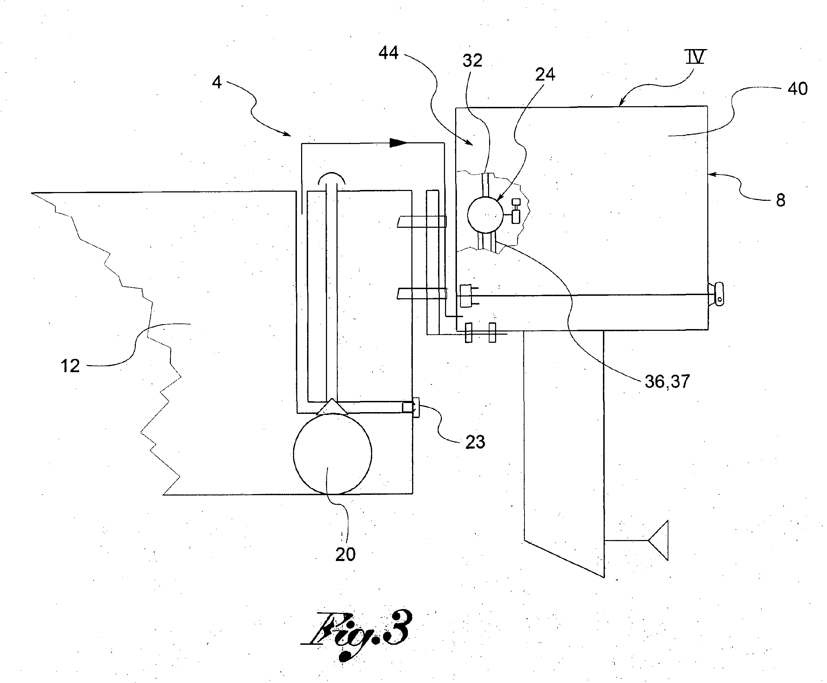

According to a further embodiment of the present invention, applied in particular to boats with outboard motors (figure 3-4), the container 40 is attached directly onto the motor 8 and the motor 8 is outboard, that is external in relation to the hull 56 of the boat 12.

According to such embodiment, the container 40 constitutes a casing enclosing the motor 8 which encloses the pressure regulator 24 and which is fitted with at least one vent 48 towards the outside environment.

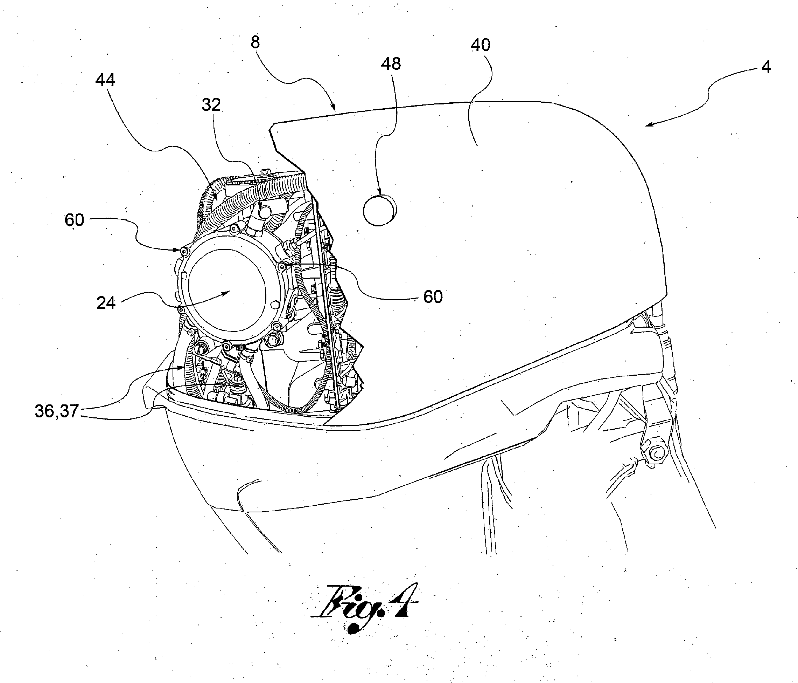

The vent 48 in figure 4 is indicated merely for illustrative purposes but may be positioned in any other position of the casing or, preferably, may coincide with the air suction apertures of the motor itself.

Said vent 48 is preferably positioned near an air suction system of the motor 8, so as to enable the supply of air to the motor 8 and to enable the introduction, directly into the motor 8 of any leaks of gas inside the container 40. In other words, as seen for the systems with inboard motor, the vents 48 act as means to channel towards the outside of the volume 44 any fuel leaks and to enable the suction of air by the motor 8, during its functioning; when the motor 8 is on, the suction of air makes it possible to aspirate any fuel leaks which are recuperated and introduced into the motor to be combusted.

In yet other words, in the case of an outboard motor, the vents 48 need not necessarily be fitted and/or positioned on the casing of the motor ; in addition, the air inlets or apertures towards the motor, as well as enabling the correct aspiration of the motor may also act as vents for any fuel leaks.

With particular reference to outboard systems, the pressure regulator 24 comprises attachment means 60 for the direct connection of the pressure regulator 24 to a portion of the associable alternatively fuelled motor 8, so as to result directly attached to a portion of said motor 8.

This way the pressure regulator 24, together with the injection devices and with the relative supply 28 and delivery 32 ducts, receives the vibrations directly from the motor 8. The risk of cracking of said ducts, and possible fuel leaks, is thereby limited.

For example, the attachment means 60 comprise screws and/or bolts, preferably fitted with damper bushing and the like.

As may be seen from the description, the system according to the invention makes it possible to overcome the drawbacks mentioned with reference to the prior art.

In particular, the system according to the present invention is extremely safe and exempt of the risk of explosion due to gas leaks.

In fact any gas leaks are expelled directly from the boat through the vents or, if envisaged, reintroduced into the suction system of the motor to be combusted; in the latter case, among other things, limiting consumption and the emission of pollutants.

In addition, the presence of the gas detectors, positioned near the vents or inside the container, makes it possible to immediately identify leaks and therefore warn the user to implement the system repairs required. In any case, thanks to the vents, the leaks are rendered safe by not stagnating inside the boat.

Lastly, the attachment of the pressure regulator directly to the motor resolves further technical problems related to possible fuel leaks.

In fact, both the regulator and the solenoid valves and/or injectors are subjected to the same source of vibrations; this way the breakages caused by vibrations for example of the supply ducts of the pressurised fuel to the reducer and of the expanded fuel to the solenoid valves of the motor, are limited.

In addition, the position of the pressure reducer inside the hermetic container constitutes a further safety element in relation to possible leaks of water. In fact, the pressure reducer is normally heated by the water or liquid of the motor cooling circuit which is sent to the reducer by means of a heating circuit provided with relative pipes as described above. This way any leaks of water could dangerously flood the boat determining, at worst, its sinking. The containment of the pressure reducer, and therefore of the relative water supply pipes inside the hermetic container rather means that any leaks of water remain contained inside the container and at most, are expelled through the vents.

A person skilled in the art may make numerous modifications and variations to the fuel supply systems described above so as to satisfy contingent and specific requirements, while remaining within the scope of protection of the invention as defined by the following claims

## Claims

1. Fuel supply system (4) for motors (8) of motor boats (12) both of the outboard and inboard type, said motors (8)being fuelled by alternative fuels, the system (4) comprising
- at least one pressure regulator (24), said pressure regulator (24) receiving the fuel from a supply duct (28)at a supply pressure and delivering it in output, through a delivery duct (32) at a delivery pressure, different from the supply pressure, to injection and/or solenoid valve devices which supply the motor (8) with fuel,
- said supply and delivery pressures being greater than the environmental pressure,
**characterised by** the fact that
- the system (4) comprises at least one closed container (40) which identifies an inner volume (44) containing said pressure regulator (24) and, at least partially, said supply (28) and delivery (32) ducts,
- the closed container (40) altogether hermetically tight sealed to the gaseous fuel, in relation to the fuel passing through the devices contained in it, said fuel being supplied at a higher pressure than the environmental pressure where the system (4) is located,
- said closed container (40) comprising at least one vent (48) in fluidic communication with the inner volume (44) of the container (40), the vent (48) fluidically connecting said inner volume (44) with the environment outside the system (4) and with the relative boat (12) which the system (4) is fitted in, so as to channel any fuel leaks, at a higher pressure than environmental pressure, towards the outside of the boat (12).

2. System (4) according to claim 1, wherein, on at least one of said vents (48), a gas detector device (52) is positioned able to detect the passage of gaseous fuel through said vent (48) and to signal the presence of a leak of fuel.

3. System (4) according to claim 1 or 2, wherein, at said vents (48) at least one fan is positioned suitable to improve the extraction of any leaks of gas from the inner volume (44) towards the outside environment and/or suitable to improve the circulation of air inside the inner volume (44).

4. System (4) according to claim 1, 2 or 3 wherein said closed container (40) is attached to a portion of hull (56) of the boat (12) so as to be inside the boat (12) and said vent (48) opens onto the outside of the boat (12) so as to place the inner volume (44) in communication with the outside environment.

5. System (4) according to any of the previous claims, wherein said closed container (40) also encloses the motor (8) and wherein said vents (48), suitable for placing the inner volume (44) in fluidic communication, with the outside environment, fuel an air suction system of the motor (8) so as to enable the introduction of air from the outside environment in the motor (8), mixed with any gas leaks inside the container (40).

6. System (4) according to any of the claims from 1 to 3, wherein the closed container (40) is attached directly onto the motor (8) and the motor (8) is outboard, that is in relation to a hull (56) of the boat (12).

7. System (4) according to claim 6, wherein the closed container (40) constitutes a casing enclosing the motor (8) which encloses the pressure regulator (24) and is fitted with at least one vent (48) towards the outside environment.

8. System (4) according to claim 6 or 7, wherein said vent (48) is positioned near an air suction system of the motor (8), so as to enable the supply of air to the motor (8) and to enable the introduction, directly into the motor (8) of any leaks of gas inside the closed container (40).

9. System (4) according to any of the claims from 6 to 8, wherein the pressure regulator (24) comprises attachment means (60) for the direct connection of the regulator (24) to a portion of the associable alternatively fuelled motor (8), so as to result directly attached to a portion of said motor (8).

10. Boat (12) with inboard or outboard motor comprising a fuel supply system (4) according to any of the previous claims.

## Patentansprüche

1. Brennstoffversorgungssystem (4) für Motoren (8) von Motorbooten (12) von sowohl des Typs Außenboarder als auch Innenboarder, wobei die Motoren (8) mit alternativen Brennstoffen betankt werden, das System umfassend
- zumindest ein Druckregulator (24), wobei der Druckregulator (24) den Brennstoff von einer Versorgungsleitung (28) mit einem Versorgungsdruck erhält und ihn durch eine Lieferleitung (32) zur Ausgabe liefert, mit einem Lieferdruck anders als der Versorgungsdruck, zu Einspritzungs- und/oder Magnetventilvorrichtungen, welche den Motor (8) mit Brennstoff versorgen,
- wobei die Versorgungs- und Lieferdrücke größer sind als der Umgebungsdruck,
durch die Tatsache gekennzeichnet, dass
- das System (4) zumindest einen geschlossenen Behälter (40) umfasst, welcher ein inneres Volumen (44) bestimmt, welches den Druckregulator (24) beinhaltet und zumindest teilweise die Versorgungs- (28) und Liefer- (32) Leitungen,
- der geschlossene Behälter (40) insgesamt gegenüber dem gasförmigen Brennstoff hermetisch dicht versiegelt ist im Bezug auf den Brennstoff, welcher durch die in ihm beinhalteten Einrichtungen geleitet wird, wobei der Brennstoff mit einem Druck der höher ist als der Umgebungsdruck, in welchem das System (4) untergebracht ist, bereitgestellt wird,
- der geschlossene Behälter (40) zumindest einen Entlüfter (48) in fluidischer Kommunikation mit dem inneren Volumen (44) des Behälters (40) umfasst, wobei der Entlüfter (48) das innere Volumen (44) mit der Umgebung außerhalb des Systems (4) und mit dem entsprechenden Boot (12), in welchem das System (4) eingebaut ist, fluidisch verbindet, um jegliche Brennstofflecks bei einem höheren Druck als der Umgebungsdruck gegenüber dem Äußeren des Boots (12) zu kanalisieren.

2. System (4) nach Anspruch 1, wobei an zumindest einem der Entlüfter (48) eine Gasdetektorvorrichtung (52) positioniert ist, welche in der Lage ist die Leitung von gasförmigen Brennstoff durch den Entlüfter (48) zu detektieren und die Gegenwart eines Lecks von Brennstoff zu signalisieren.

3. System (4) nach Anspruch 1 oder 2, wobei an den Entlüftern (48) zumindest ein Ventilator positioniert ist, welcher geeignet ist, um die Extraktion von irgendwelchen Lecks von Gas von dem inneren Volumen (44) hin zur äußeren Umgebung zu verbessern und/oder geeignet ist, um die Zirkulation von Luft im inneren Volumen (44) zu verbessern.

4. System (4) nach Ansprüche 1, 2 oder 3, wobei der geschlossene Behälter (40) an einem Abschnitt des Rumpfs (56) des Boots (12) angebracht ist, um innerhalb des Boots (12) zu sein und der Entlüfter (48) nach dem Äußeren des Boots (12) hin öffnet, um das innere Volumen (44) in Kommunikation mit der äußeren Umgebung zu stellen.

5. Das System (4) nach einem der vorangegangenen Ansprüche, wobei der geschlossene Behälter (40) auch den Motor (8) umschließt und wobei die Entlüfter (48), welche geeignet sind um ein inneres Volumen (44) in fluidischer Kommunikation mit der äußeren Umgebung zu stellen, ein Luftansaugsystem des Motors (8) betanken, um die Einführung von Luft von der äußeren Umgebung in den Motor (8), gemischt mit irgendwelchen Gaslecks innerhalb des Behälters (40), zu ermöglichen.

6. System (4) nach irgendeinem der Ansprüche von 1 bis 3, wobei der geschlossene Behälter (40) direkt am Motor (8) angebracht ist und der Motor (8) in Bezug auf einen Rumpf (56) des Boots (12) außenboards ist.

7. System (4) nach Anspruch 6, wobei der geschlossene Behälter (40) ein den Motor (8) umschließendes Gehäuse darstellt, welches den Druckregulator (24) umschließt und mit zumindest mit einem Entlüfter (48) hin zur äußeren Umgebung ausgestattet ist.

8. System (4) nach Anspruch 6 oder 7, wobei der Entlüfter (48) nahe eines Luftansaugsystems des Motors (8) positioniert ist, um die Versorgung des Motors (8) mit Luft zu ermöglichen und um die Einführung irgendwelcher Lecks von Gas innerhalb des geschlossenen Behälters (40) direkt in den Motor (8) zu ermöglichen.

9. System (4) nach irgendeinem der Ansprüche von 6 bis 8, wobei der Druckregulator (24) Befestigungsmittel (60) für die direkte Verbindung des Regulators (24) mit einem Abschnitt des assoziierbaren alternativ betankten Motor (8) umfasst, so dass es sich ergibt direkt an einem Abschnitt des Motors (8) befestigt zu sein.

10. Boot (12) mit Innenboard- oder Außenbordmotor umfassend ein Brennstoffversorgungssystem (4) nach irgendeinem der vorangegangenen Ansprüche.

## Revendications

1. Système d'alimentation en carburant (4) pour des moteurs (8) de bateaux à moteur (12) de type intérieur aussi bien que hors-bord, lesdits moteurs (8) étant alimentés en carburants alternatifs, lequel système (4) comprend
- au moins un régulateur de pression (24), lequel régulateur de pression (24) reçoit le carburant par une conduite d'alimentation (28) sous une pression d'alimentation et le fournissant en sortie, via une conduite de fourniture (32) sous une pression de fourniture différente de la pression d'alimentation, à des dispositifs de soupape d'injection et/ou d'électrovalve qui alimentent le moteur (8) en carburant,
- lesdites pressions d'alimentation et de fourniture étant supérieures à la pression ambiante,
**caractérisé en ce que**
- le système (4) comprend au moins un contenant fermé (40) qui délimite un volume intérieur (44) contenant ledit régulateur de pression (24) et, au moins partiellement, lesdites conduites d'alimentation (28) et de fourniture (32),
- le contenant fermé (40) est fermé de façon globalement hermétique au carburant gazeux, par rapport au passage du carburant à travers les dispositifs qu'il contient, ledit carburant étant fourni à une pression supérieure à la pression ambiante à l'endroit où se trouve le système (4),
- ledit contenant fermé (40) comprenant au moins un évent (48) en communication pour la circulation de fluide avec le volume intérieur (44) du contenant (40), lequel évent (48) relie pour la circulation de fluide ledit volume intérieur (44) à l'environnement à l'extérieur du système (4) et au bateau (12) sur lequel le système (4) est installé, de façon à canaliser les éventuelles fuites de carburant, sous une pression supérieure à la pression ambiante, vers l'extérieur du bateau (12).

2. Système (4) selon la revendication 1, dans lequel est placé sur au moins un desdits évents (48) un dispositif détecteur de gaz (52) qui peut détecter le passage de carburant gazeux à travers ledit évent (48) et signaler la présence d'une fuite de carburant.

3. Système (4) selon la revendication 1 ou 2, dans lequel est monté au niveau desdits évents (48) au moins un ventilateur apte à améliorer l'extraction d'éventuelles fuites de gaz du volume intérieur (44) vers l'environnement extérieur et/ou apte à améliorer la circulation d'air à l'intérieur du volume intérieur (44).

4. Système (4) selon la revendication 1, 2 ou 3, dans lequel ledit contenant fermé (40) est fixé à une partie de la coque (56) du bateau (12) de façon à se trouver à l'intérieur du bateau (12) et ledit évent (48) s'ouvre vers l'extérieur du bateau (12) de façon à mettre le volume intérieur (44) en communication avec l'environnement extérieur.

5. Système (4) selon l'une quelconque des revendications précédentes, dans lequel ledit contenant fermé (40) renferme également le moteur (8) et dans lequel lesdits évents (48), aptes à mettre le volume intérieur (44) en communication pour la circulation de fluide avec l'environnement extérieur, alimentent un système d'aspiration d'air du moteur (8) de façon à permettre l'introduction d'air de l'environnement extérieur dans le moteur (8), mélangé avec les éventuelles fuites de gaz à l'intérieur du contenant (40).

6. Système (4) selon l'une quelconque des revendications 1 à 3, dans lequel le contenant fermé (40) est fixé directement sur le moteur (8) et le moteur (8) est hors-bord, c'est-à-dire en relation avec une coque (56) du bateau (12).

7. Système (4) selon la revendication 6, dans lequel le contenant fermé (40) constitue un boîtier renfermant le moteur (8) qui renferme le régulateur de pression (24) et qui est équipé d'au moins un évent (48) vers l'environnement extérieur.

8. Système (4) selon la revendication 6 ou 7, dans lequel ledit évent (48) est placé près d'un système d'aspiration d'air du moteur (8) afin de permettre l'alimentation en air du moteur (8) et de permettre l'introduction, directement dans le moteur (8), d'éventuelles fuites de gaz à l'intérieur du contenant fermé (40).

9. Système (4) selon l'une quelconque des revendications 6 à 8, dans lequel le régulateur de pression (24) comprend des moyens de fixation (60) pour le raccordement direct du régulateur (24) à une partie du moteur (8) à carburant alternatif qui peut lui être associé, afin d'être directement fixé à une partie dudit moteur (8).

10. Bateau (12) avec un moteur intérieur ou hors-bord comprenant un système d'alimentation en carburant (4) selon l'une quelconque des revendications précédentes.
